# FASCICULE DE BREVET EUROPEEN

(11) **EP 4 022 210 B1**
(45) Date de publication et mention de la délivrance du brevet: **19.07.2023**
(21) Numéro de dépôt: 20765221.5
(22) Date de dépôt: 26.08.2020
(51) Int. Cl.: F16L 11/08, F16L 11/16

(54) **CONDUITE FLEXIBLE AVEC PASSAGE DE GAZ RADIAL, PROCÉDÉ DE FABRICATION ET UTILISATION ASSOCIÉE**
FLEXIBLES ROHR MIT RADIALGASKANAL, HERSTELLUNGSVERFAHREN UND VERWENDUNG DAVON
FLEXIBLE PIPE WITH RADIAL GAS PASSAGE, MANUFACTURING METHOD AND USE THEREOF

(30) Priorité: 28.08.2019 FR 1909479
(43) Date de publication de la demande: 06.07.2022
(73) Titulaire: TechnipFMC Subsea France, 92400 Courbevoie (FR)
(72) Inventeur: HANONGE, Didier, 76190 ALLOUVILLE-BELLEFOSSE (FR)
(74) Mandataire: Lavoix
(86) Numéro de dépôt international: PCT/EP2020/073835
(87) Numéro de publication internationale: WO 2021/037902

(56) Documents cités:
- FR-A1- 2 846 395
- FR-A1- 2 852 658
- US-A1- 2003 056 845
- US-A1- 2011 030 831

## Description

La présente invention concerne une conduite flexible de transport de fluide selon le préambule de la revendication 1.

US2003/056845 décrit une conduite flexible du type précité.

La conduite flexible est par exemple telle que décrite dans les documents normatifs publiés par l'American Petroleum Institute (API), API 17J, 4ème édition - mai 2014 et API RP 17B, 5ème édition - mars 2014.

De telles conduites flexibles sont notamment utilisées comme lignes de production, d'injection d'eau ou de gaz, d'export de gaz, de service, notamment en mer profonde dans l'industrie pétrolière et gazière. Elles s'étendent généralement à travers une étendue d'eau entre une installation de surface et un ensemble de fond ou entre deux ensembles de fond. Ces lignes peuvent également s'étendre entre deux installations de surface.

L'installation de surface est par exemple une barge, une plateforme semi-submersible, un FPSO (pour « Floating Production Storage and Offloading », soit ensemble de stockage et de déchargement de production flottant), un FLNG (pour « Floating Liquefied Natural Gas », soit ensemble de liquéfaction de gaz naturel flottant), un FSU (pour « Floating Storage Unit », soit unité de stockage flottant), ou un autre ensemble flottant.

Les conduites flexibles comportent généralement une gaine externe de protection définissant un volume intérieur et au moins une gaine interne imperméable aux liquides disposée à l'intérieur du volume intérieur. La gaine interne est typiquement une gaine de pression délimitant un passage de circulation d'un fluide.

Le fluide transporté par ce type de conduite est, en particulier, un mélange d'hydrocarbures pouvant comporter une forte teneur en gaz corrosifs comme du dioxyde de carbone (CO₂) et/ou du sulfure d'hydrogène (H₂S).

La gaine externe de protection et la gaine interne délimitent entre elles un espace annulaire recevant généralement au moins une couche de renfort métallique.

La couche de renfort métallique comprend par exemple une voûte de pression formée par un enroulement d'un fil profilé métallique agencé et agrafé (« interlocked » en anglais) autour de la gaine de pression. Le profil est agrafé de façon à limiter le fluage de la gaine de pression sous l'effet de la pression interne.

La couche de renfort métallique comprend également des nappes d'armures de traction formées par des nappes de fils métalliques disposées autour de la voûte de pression, dans l'espace annulaire, pour assurer une bonne résistance à la traction.

L'espace annulaire contenant la voûte de pression et les nappes d'armures de traction est généralement soumis à des gaz acides issus des fluides transportés et qui diffusent au travers de la gaine interne. La pression partielle de ces gaz acides au sein de l'espace annulaire est parfois relativement élevée.

En présence d'eau, pouvant provenir de l'eau contenu dans les hydrocarbures transportés ayant migré à travers la gaine interne vers l'espace annulaire, ou provenant de l'étendue d'eau en cas d'une déchirure de la gaine externe, les couches de renforcement métalliques situées dans cet espace annulaire, en particulier la voûte de pression et les nappes d'armure de traction, subissent alors de la corrosion.

Ceci peut conduire, suivant la sévérité du milieu régnant dans l'espace annulaire, à une perte d'intégrité des propriétés mécaniques de la conduite et à terme, à sa ruine.

Par ailleurs, la combinaison du milieu corrosif associé à des chargements mécaniques (venant des étapes de fabrication et des chargements en opération) peut conduire à la formation de corrosion sous contrainte (SCC, de l'anglais « Stress Corrosion Cracking »).

Compte tenu de l'agrafage de la voûte de pression, une quantité importante de gaz corrosifs est susceptible de s'accumuler dans l'espace annulaire, à l'intérieur de la voûte de pression. Ceci rend le milieu particulièrement corrosif entre la gaine de pression et la voûte de pression.

Dans certains cas, en présence d'une voûte de pression, la pression partielle en dioxyde de carbone sous la voûte de pression est susceptible d'augmenter significativement, typiquement d'un facteur trois par rapport à un flexible sans voûte de pression agrafée, voire plus dans certains cas critiques. Ceci peut entraîner des phénomènes de corrosion sous contrainte locaux pour la voûte de pression et entraîner sa ruine.

Un but de l'invention est donc de fournir une conduite flexible de transport de fluide, apte à transporter des fluides corrosifs, mais qui présente une durée de vie améliorée, en particulier au niveau de la voûte de pression.

A cet effet, l'invention a pour objet une conduite flexible selon la revendication 1.

Des modes de réalisation avantageux de la conduite flexible selon l'invention sont définis par les caractéristiques techniques des revendications 2 à 12. La conduite flexible peut également comprendre les caractéristiques suivantes :
- la surface cumulée du ou des passages additionnels, prise en projection dans un plan transversal, correspond à la surface définie par un jeu compris entre 0,1 mm et 0,3 mm entre le téton d'une spire et le fond de la gorge de la spire adjacente et est comprise avantageusement entre 9 mm² et 262 mm² ;
- la dimension axiale maximale du trou traversant, prise en projection sur l'axe central est inférieure à la largeur du trou traversant, prise transversalement par rapport à l'axe central.

L'invention a également pour objet un procédé de fabrication d'une conduite flexible, selon les revendications 13 ou 14.

L'invention a également pour objet une utilisation selon la revendication 15.

L'invention sera mieux comprise à la lecture de la description qui va suivre, donnée uniquement à titre d'exemple, et faite en se référant aux dessins annexés, sur lesquels :
- [Fig 1] La figure 1 est une vue en perspective partiellement écorchée d'un tronçon central d'une première conduite flexible selon l'invention ;
- [Fig 2] La figure 2 est une vue partielle, prise en coupe suivant un plan axial médian, d'un détail de la conduite de la figure 1 ;
- [Fig 3] La figure 3 est une vue en coupe illustrant la voûte de pression et les jeux entre les spires successives de la voûte ;
- [Fig 4] La figure 4 est une vue partielle d'une spire d'une voûte de pression d'une première conduite selon l'invention ;
- [Fig 5] La figure 5 est une vue analogue à la figure 4 d'une variante de conduite flexible selon l'invention ;
- [Fig 6] La figure 6 est une vue analogue à la figure 4 d'une variante de conduite flexible selon l'invention ;
- [Fig 7] La figure 7 est une vue de sections agrafées de voûtes de pression d'une variante de conduite flexible selon l'invention ;
- [Fig 8 ] La figure 8 est une vue de sections agrafées de voûtes de pression d'une variante de conduite flexible selon l'invention ;
- [Fig 9] La figure 9 est une vue de sections agrafées de voûtes de pression d'une variante de conduite flexible selon l'invention ;
- [Fig 10] La figure 10 est une vue de face du profil d'une encoche ménagée dans un téton d'une voûte selon l'invention ;
- [Fig 11] La figure 11 est une vue du contour d'un trou traversant ménagé dans le fond d'une gorge d'une voûte selon l'invention.

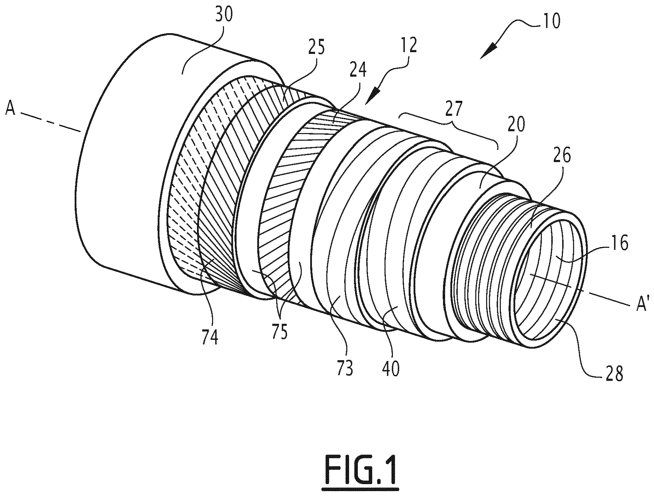

Une première conduite flexible 10 selon l'invention est illustrée partiellement par la figure 1.

La conduite flexible 10 comporte un tronçon central 12. Elle comporte, à chacune des extrémités axiales du tronçon central 12, un embout d'extrémité (non visible).

En référence à la figure 1, la conduite 10 délimite un passage central 16 de circulation d'un fluide, avantageusement d'un fluide pétrolier. Le passage central 16 s'étend suivant un axe central A-A', entre l'extrémité amont et l'extrémité aval de la conduite 10.

La conduite flexible 10 est destinée à être disposée à travers une étendue d'eau (non représentée) dans une installation d'exploitation de fluide, notamment d'hydrocarbures.

L'étendue d'eau est par exemple, une mer, un lac ou un océan. La profondeur de l'étendue d'eau au droit de l'installation d'exploitation de fluide est par exemple comprise entre 50 m et 4000 m.

L'installation d'exploitation de fluide comporte un ensemble de surface notamment flottant et un ensemble de fond (non représentés) qui sont généralement raccordés entre eux par la conduite flexible 10.

La conduite flexible 10 est de préférence une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite. Avantageusement, toutes les couches de la conduite flexible sont libres de se déplacer l'une par rapport à l'autre.

Une telle conduite est par exemple décrite dans les documents normatifs publiés par l'American Petroleum Institute (API), API 17J, 4ème édition - mai 2014 et API RP 17B, 5ème édition - mars 2014.

Par ailleurs, dans tout ce qui suit, les termes « extérieur » et « intérieur » s'entendent généralement de manière radiale par rapport à l'axe central A-A' de la conduite, le terme « extérieur » s'entendant comme relativement plus éloigné radialement de l'axe A-A' et le terme « intérieur » s'étendant comme relativement plus proche radialement de l'axe A-A' de la conduite.

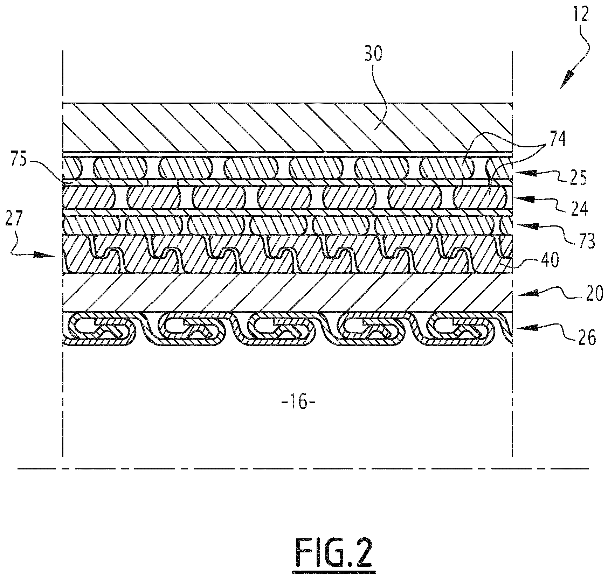

Comme illustré par les figures 1 et 2, la conduite 10 délimite une pluralité de couches concentriques autour de l'axe A-A', qui s'étendent continûment le long du tronçon central 12 jusqu'aux embouts situés aux extrémités de la conduite (non représentés).

Selon l'invention, la conduite 10 comporte au moins une première gaine tubulaire 20 à base de matériau polymère, constituant avantageusement une gaine de pression.

La conduite 10 comporte en outre au moins une couche d'armures de traction 24, 25 disposée extérieurement par rapport à la première gaine 20 formant une gaine de pression.

La conduite 10 comporte en outre éventuellement une carcasse interne 26 disposée à l'intérieur de la gaine de pression 20.

La conduite 10 comporte une voûte de pression 27 intercalée entre la gaine de pression 20 et la ou les couches d'armures de traction 24, 25, et une gaine extérieure 30, destinée à la protection de la conduite 10.

De manière connue, la gaine de pression 20 est destinée à confiner de manière étanche le fluide transporté dans le passage 16. La gaine de pression 20 est avantageusement formée en matériau polymère. Le polymère est par exemple à base d'une polyoléfine telle que du polyéthylène ou du polypropylène, à base d'un polyamide tel que du PA11 ou du PA12, ou à base d'un polymère fluoré tel que du polyfluorure de vinylidène (PVDF).

En variante, la gaine de pression 20 est formée à base d'un polymère haute performance tel qu'un polyaryléthercétone (PAEK) tel que le polyéthercétone (PEK), le polyétheréthercétone (PEEK), le polyétheréthercétonecétone (PEEKK), le polyéthercétonecétone (PEKK) ou le polyéthercétoneéthercétonecétone (PEKEKK), le polyamide-imide (PAl), le polyéther-imide (PEI), le polysulfone (PSU), le polyphénylsulfone (PPSU), le polyéthersulfone (PES) , le polyarylsulfone (PAS), le polyphénylèneéther (PPE), le polysulfure de phénylène (PPS) les polymères à cristaux liquides (LCP), le polyphtalamide (PPA), les dérivés fluorés tels que le polytétrafluoroéthylène (PTFE), le perfluoropolyéther (PFPE), le perfluoroalkoxy (PFA) ou l'éthylène chlorotrifloroethylène (ECTFE) et/ou leurs mélanges

L'épaisseur de la gaine de pression 20 est par exemple comprise entre 5 mm et 20 mm.

La carcasse 26, lorsqu'elle est présente, est formée d'un feuillard métallique profilé 28, enroulé en hélice. Les spires successives du feuillard sont agrafées les unes aux autres.

La fonction principale de la carcasse 26 est de reprendre les efforts radiaux d'écrasement. Les efforts radiaux d'écrasement sont par exemple engendrés par la pression hydrostatique de l'étendue d'eau ou par les équipements de pose pendant l'installation de la conduite.

La carcasse 26 est disposée à l'intérieur de la gaine de pression 20. Elle est propre à entrer en contact avec le fluide circulant dans la gaine de pression 20.

La conduite flexible 10 est alors désignée par le terme anglais « rough bore » en raison de la géométrie de la carcasse 26.

En variante (non représentée), la conduite flexible 10 est dépourvue de carcasse interne, elle est alors désignée par le terme anglais « smooth bore ».

En référence à la figure 1, la voûte de pression 27 est destinée à reprendre les efforts liés à la pression régnant à l'intérieur de la gaine de pression 20. Elle est par exemple formée d'au moins un fil profilé métallique 40 agrafé et enroulé en hélice autour de la gaine de pression 20.

Le matériau métallique formant le fil profilé 40 est choisi parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

La voûte de pression 27 est enroulée en hélice à pas court autour de la gaine de pression 20, c'est-à-dire avec un angle d'hélice de valeur absolue proche de 90° par rapport à l'axe A-A', typiquement compris entre 75° et 90°. Le fil profilé 40 présente généralement une géométrie complexe, ici avec un profil en forme de Z ou Zeta.

Le fil de forme profilé 40 comporte une pluralité de spires 42 agrafées les unes aux autres Chaque spire 42 correspond à un enroulement de 360° autour de l'axe A-A'. Elle présente, en section transversale dans un plan axial médian passant par l'axe A-A', un profil en forme de Z ou Zeta.

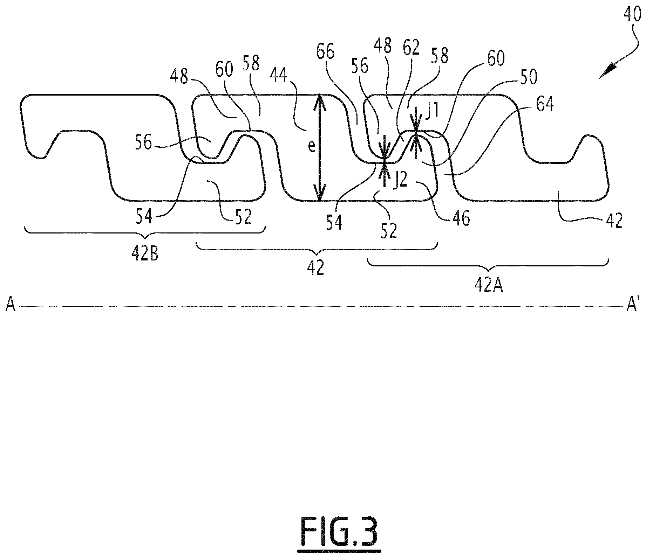

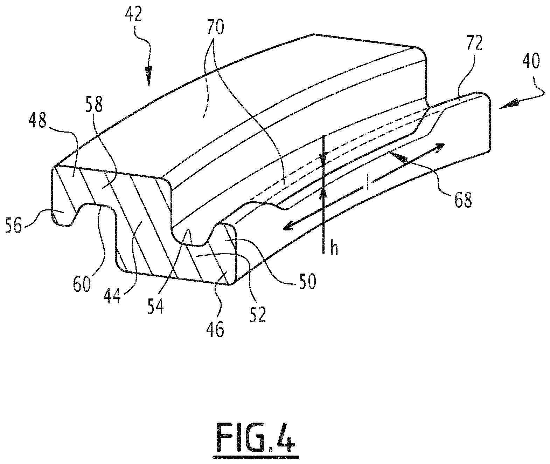

En référence aux figures 3 et 4, le profil défini par chaque spire 42 présente une partie centrale 44 pleine d'épaisseur e, une première partie d'extrémité intérieure 46 faisant saillie à partir de la partie centrale 44 dans une région intérieure de la partie centrale 44, et une partie d'extrémité extérieure 48 faisant saillie à partir d'une région extérieure de la partie centrale 44, à l'opposé axialement de la partie d'extrémité intérieure 46.

La partie d'extrémité intérieure 46, présente, à son bord libre, un téton 50 intérieur faisant saillie radialement vers l'extérieur. Elle définit, entre le téton 50 et la partie centrale 44, une gorge 52 intérieure délimitée vers l'intérieur par un fond 54.

A l'opposé, la partie d'extrémité extérieure 48 comporte, à son bord libre, un téton 56 additionnel extérieur faisant saillie vers l'intérieur. Le téton additionnel 56 définit, avec la partie centrale 44, une gorge 58 additionnelle extérieure délimitée vers l'extérieur par un fond 60 additionnel.

Dans le plan axial médian passant par l'axe A-A', le téton 50 de chaque spire 42 est ainsi agrafé dans la gorge 58 additionnelle d'une première spire adjacente 42A, en étant reçu dans la gorge 58 contre le fond 60 de la gorge 58.

De même, le téton 56 additionnel de chaque spire 42 s'agrafe dans la gorge 52 d'une deuxième spire adjacente 42B opposée axialement à la première spire adjacente 42A.

Comme illustré sur la figure 3, le téton 50 de la spire 42 définit avec le fond 60 de la gorge 58 de la spire 42A adjacente un premier jeu J1 radial hélicoïdal permettant le passage de gaz depuis l'intérieur de la voûte 27 vers l'extérieur de la voûte 27.

De même, le fond 54 de la gorge 52 de la spire 42 définit avec le téton additionnel 56 de la spire adjacente 42A, un deuxième jeu J2 radial hélicoïdal permettant le passage de gaz depuis l'intérieur de la voûte 27 vers l'extérieur de la voûte 27.

Les jeux radiaux J1 et J2 sont raccordés entre eux par un interstice 62 incliné entre les tétons 50 et 56 situés en regard.

Le jeu J1 est raccordé à l'espace situé à l'intérieur de la voûte de pression 27 vers l'axe A-A' par un canal intérieur 64 présent entre le téton 50 de la spire 42 et la partie centrale 44 de la spire 42A adjacente.

Le canal intérieur 64 débouche vers l'intérieur en regard de la gaine de pression 20. Il reçoit donc les gaz qui diffusent depuis l'intérieur de la conduite 16 au travers de la gaine de pression 20.

Le jeu J2 est raccordé à l'espace situé à l'extérieur de la voûte de pression 27 par rapport à l'axe A-A' par un canal 66 extérieur présent entre le téton 56 additionnel de la spire adjacente 42A et la partie centrale 44 de la spire 42. Le canal extérieur 66 débouche vers l'extérieur en regard des couches d'armures 24, 25.

Les canaux intérieur 64 et extérieur 66 sont définis par les intervalles entre les profils des spires 42 et 42A. Le jeu J1 assure donc le passage des gaz entre le canal intérieur 64 et l'interstice 62. De même, le jeu J2 assure le passage des gaz entre l'interstice 62 et le canal extérieur 66.

Lors de la fabrication de la voûte de pression 27, il est contrôlé que les fils profilés 40 sont posés avec des tolérances de pas (« pitch » en Anglais selon la norme API 17J) telle que la conduite 10 présente un rayon minimum de stockage (« SR » ou « Storage Radius » selon la norme API 17J) possédant une marge de tolérance de 10% par rapport à son rayon de courbure de blocage (« LR » ou « Locking Radius » selon la norme API17J). Ainsi, une fois la conduite 10 en service, il existe toujours un interstice 62 et des canaux 64 et 66 non nuls.

Pour des raisons de tolérances de fabrication des profils des spires 42, ou lors des étapes de fabrication de la conduite 10 ou lorsque des efforts radiaux de pression interne et/ou externe s'exercent sur la voûte de pression 27, il se produit parfois un phénomène de tuilage entre spires 42, 42A, 42B adjacentes ou un phénomène de déformation des profils. Cela peut se traduire par une inclinaison radiale par rapport à l'axe A-A' d'une spire 42, 42A, 42B, du fil de forme profilé 40 par rapport à une spire adjacente 42, 42A, 42B du fil de forme profilé 40 ayant pour effet qu'un des tétons 50, 56 d'une spire 42, 42A, 42B soit en contact avec le fond 60, 54 une des gorges 58, 52 de la spire adjacente 42, 42A, 42B.

Au moins un jeu J1 et/ou J2 est alors donc nul et ainsi les canaux 64, 66 ne communiquent plus avec l'interstice 62. Ainsi, dans une conduite de l'état de la technique, le passage des gaz à travers l'agrafage de la voûte de pression 27 s'en trouve complètement bloqué.

En référence à la figure 4, dans une conduite 10 selon l'invention, les tétons 50, 56 de la spire 42 définissent au moins un passage additionnel 68, de préférence au moins un passage additionnel 68 de circulation de gaz par téton 50, 56 s'ajoutant au jeu hélicoïdal J1 et J2.

Comme illustré par la figure 4, chaque passage additionnel 68 est ici défini par une encoche 70 ménagée dans le bord libre 72 de chaque téton 50, 56.

Chaque encoche 70 débouche radialement respectivement vers l'extérieur ou vers l'intérieur, selon qu'elle est sur le téton 50 ou sur le téton 56 respectivement. Elles débouchent axialement dans l'interstice 62 et dans l'un des canaux 64, 66 de façon à garantir un passage du gaz de l'intérieur vers l'extérieur de la couche 40 quelle que soit la taille des jeux J1 et J2, et même si ceux-ci sont complètement fermés.

Comme illustré par la figure 4, chaque encoche 70 s'étend uniquement sur une partie de la circonférence du téton respectif 50, 56 autour de l'axe central A-A'.

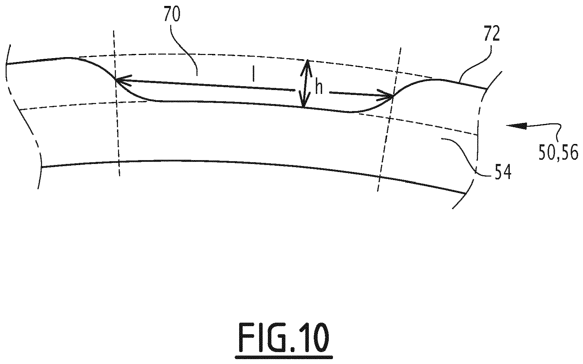

En référence à la figure 10, en projection dans un plan transversal perpendiculaire à l'axe A-A', la largeur I de l'encoche 70, prise entre les points d'inflexions des bords de l'encoche 70 est avantageusement inférieure à 15% du périmètre du bord libre 72 du téton respectif 50, 56. En variante, la largeur I est augmentée en fonction des besoins de surface de passage, qui dépendent des débits de gaz à considérer.

La hauteur maximale h de l'encoche 70, prise radialement par rapport à l'axe A-A', est comprise entre 10% et 100% de la hauteur du téton, prise radialement par rapport à l'axe central A-A' entre respectivement le fond 54 de la gorge 52 et le bord libre 72 du téton 50 ou entre le fond 60 de la gorge 58 et le bord libre 72 du téton 56 à l'écart de l'encoche 70.

Pour chaque spire 42, la surface de chaque passage additionnel 68, prise en projection dans un plan transversal perpendiculaire à l'axe A-A', correspond de préférence à la surface définie par un jeu J1 ou J2 d'au moins 0,1 mm, notamment supérieur à 0,2 mm, en particulier comprise entre 0,1 mm et 0,3 mm. En variante, cette surface de passage est adaptée au cas par cas en fonction du débit de gaz à considérer.

Des exemples de dimensions possibles pour le passage additionnel 68 sont décrits dans le tableau ci-dessous, correspondant à des profils en Z d'épaisseurs e respectives égales à 6.2 mm, 8 mm, 10 mm et 12 mm pour des diamètres internes de voûte 27 compris entre 56 mm et 550 mm, pour une surface de passage minimum garantie correspondant à un jeu J1 et J2 de 0,2 mm.

**[Table 1]**

| | Sₘᵢₙ (mm) | Sₘₐₓ (mm) | S_{moy} (mm) | Max h (mm) | Max l (mm) | Max S (mm²) |
|---|---|---|---|---|---|---|
| Zeta 6,2 | 19 | 73 | 46 | 1,5 | 68,4 | 100 |
| Zeta 8 | 30 | 105 | 67 | 1,9 | 100,2 | 188 |
| Zeta 10 | 33 | 149 | 91 | 2,3 | 135,9 | 318 |
| Zeta 12 | 50 | 175 | 113 | 2,8 | 167,8 | 471 |

Smin, Smax et Smoy correspondent respectivement à la surface minimale, à la surface maximale et à la surface moyenne d'un jeu J1 et J2 de 0,2 mm pour des diamètres internes de voûte 27 compris entre 56 mm et 550 mm. Max h et Max l correspondent respectivement à des exemples de hauteur et de largeurs maximales de l'encoche 70. Max S est la surface du passage additionnel défini par l'encoche 70.

Les surfaces Max S, comprises entre 100 mm² et 471 mm² en fonction de la taille du profil, sont toujours bien supérieures aux surfaces moyennes représentées par des jeux J1 ou J2 de 0,2 mm.

Ainsi, même si un effet de blocage se produit, lié à l'agrafage complet de la voûte de pression 27, et notamment de l'insertion des tétons 50, 56 respectifs dans les gorges respectives 58, 52, et ainsi à la disparition des jeux J1 et J2, les passages additionnels 68 définis par les encoches 70 dans les tétons 50, 56 respectifs offrent une surface de passage pour les gaz, et empêchent leur accumulation à l'intérieur de la voûte de pression 27.

Ceci diminue très significativement la pression partielle de gaz corrosifs à l'intérieur de la voûte de pression 27, notamment entre la voûte de pression 27 et la gaine de pression 20. L'effet de la tortuosité devient alors contrôlable.

La conduite flexible 10 comprend optionnellement une frette 73, visible partiellement sur les figures 1 et 2.

La frette 73, lorsqu'elle est présente, est constituée par un enroulement en spirale d'au moins un fil avantageusement de section transversale rectangulaire autour de la voûte de pression 27. La superposition de plusieurs fils enroulés autour de la voûte de pression 27 remplace avantageusement une épaisseur totale de frette 73 donnée. Ceci augmente la résistance à l'éclatement de la conduite flexible 10. L'enroulement d'au moins un fil est à pas court autour de l'axe A-A' de la conduite flexible 10, c'est-à-dire avec un angle d'hélice de valeur absolue proche de 90° par rapport à l'axe A-A', typiquement compris entre 75° et 90°.

La conduite flexible 10 selon l'invention comprend au moins une couche d'armures 24, 25 formée d'un enroulement hélicoïdal d'au moins un élément d'armure 74 allongé.

Dans l'exemple représenté sur la figure 1, la conduite flexible 10 comporte une pluralité de couches d'armures 24, 25, notamment une couche d'armures intérieure 24, appliquée sur la voûte de pression 27 ou sur la frette 73, lorsque présente, et une couche d'armures extérieure 25 autour de laquelle est disposée la gaine extérieure 30.

Chaque couche d'armures 24, 25 comporte des éléments d'armure 74 longitudinaux enroulés à pas long autour de l'axe A-A' de la conduite.

Par « enroulé à pas long », on entend que la valeur absolue de l'angle d'hélice par rapport à l'axe A-A' est inférieure à 60°, et est typiquement comprise entre 10° et 60°, notamment entre 25° et 55°.

Les éléments d'armure 74 d'une première couche 24 sont enroulés généralement suivant un angle opposé par rapport aux éléments d'armure 74 d'une deuxième couche 25. Ainsi, si l'angle d'enroulement des éléments d'armure 74 de la première couche 24 est égal à +α, α étant compris entre 10° et 60°, l'angle d'enroulement des éléments d'armure 74 de la deuxième couche d'armures 25 disposée au contact de la première couche d'armures 24 est par exemple égal à - α°.

Les éléments d'armure 74 sont par exemple formés par des fils métalliques, notamment des fils en acier, ou par des rubans en matériau composite, par exemple des rubans renforcés de fibres de carbone.

Le matériau métallique formant les éléments d'armure 74 est choisi avantageusement parmi un acier au carbone, notamment choisi parmi les grades d'acier au carbone comprenant entre 0,1% et 0,8% de carbone. Lors des applications en milieu particulièrement corrosif, le matériau métallique est choisi parmi les aciers inoxydables tels que les aciers duplex.

Dans cet exemple, chaque couche d'armures de traction 24, 25 repose avantageusement sur au moins une bande anti-usure 75, visible sur les figures 1 et 2. La bande anti-usure 75 est par exemple réalisée en plastique, notamment à base d'un polyamide, d'un polyfluorure de vinylidène (PVDF), d'un polyphénylsulfone (PPSU) ou encore d'un polyétheréthercétone (PEEK). Elle présente une épaisseur inférieure à l'épaisseur de chaque gaine interne ou externe.

Avantageusement, un ruban de maintien tel qu'une bande en aramide à résistance mécanique élevée (Technora^{®} ou Kevlar^{®}) est enroulé autour de la deuxième couche d'armures de traction 25 la plus à l'extérieur par rapport à l'axe A-A', pour assurer un maintien mécanique des couches d'armures de traction 24, 25. Alternativement, les fibres d'aramide sont remplacées par des fibres de verre, des fibres de carbone ou des fibres de basalte.

La gaine extérieure 30 est destinée à empêcher la pénétration de fluide depuis l'extérieur de la conduite flexible 10 vers l'intérieur, dans l'espace annulaire entre la gaine de pression 20 et la gaine extérieure 30. Elle est avantageusement réalisée en matériau polymère, notamment à base d'un polyoléfine, tel que du polyéthylène, ou à base d'un polyamide, tel que du PA11 ou du PA12.

L'épaisseur de la gaine extérieure 30 est par exemple comprise entre 5 mm et 15 mm.

La fabrication de la conduite flexible 10 selon l'invention va maintenant être décrite.

Initialement, les dimensions de la voûte de pression 27 sont déterminées. Le type de fil de forme profilé 40 est choisi, et en fonction du diamètre de voûte de pression 27 souhaité, le nombre et la taille des passages de circulation additionnels sont déterminés à partir de la valeur de surface de passage qu'aurait un jeu J1 et J2 de l'ordre de 0,2mm, et pourra être adapté, c'est-à-dire augmenté ou diminué en fonction du débit de gaz qui devra transiter dans la voûte de pression 40.

Chaque encoche 70 est ensuite ménagée dans un téton 50, 56, avec la surface correspondant au jeu minimal déterminé, cette surface pouvant varier entre 5 mm² et 450 mm², notamment entre 15 mm² et 300 mm², préférentiellement entre 19 mm² et 175 mm².

Chaque encoche 70 est ménagée par meulage, perçage, ou/et par laminage avantageusement à chaud du fil profilé 40. En variante, notamment pour un fil de forme 40 non laminé à chaud, un chauffage local par induction est utilisé pour réaliser l'encoche 70 dans le téton 50, 56.

Puis, la gaine de pression 20 est fournie, par exemple en étant extrudée. Le fil de forme profilé 40, ici muni des encoches 70, est alors enroulé à pas court autour de la gaine de pression 20, en agrafant les tétons 50, 56 respectifs dans les gorges 58, 52 respectives, et en s'assurant que les pas de fabrication sont dans les tolérances recommandées de façon à assurer un interstice 62 et des canaux 64, 66 non nuls,

Ensuite, les couches d'armure 24, 25 sont mises en place et la gaine extérieure 30 est fournie autour des couches d'armure 24, 25, par exemple par extrusion.

En utilisation, lors de la circulation de fluide à travers le passage central 16 de la conduite, du gaz corrosif est susceptible de diffuser à travers la gaine de pression 20, et d'atteindre l'espace annulaire entre la gaine de pression 20 et la gaine extérieure 30 et plus précisément l'espace situé entre la voûte de pression 27 et la gaine de pression 20.

Ces gaz circulent successivement à travers le canal intérieur 64, dans les encoches 70 du téton 50 au regard de la gorge 58 et dans le premier jeu J1 entre le téton 50 et la gorge 58 lorsque ce jeu est présent, dans l'interstice 62, dans les encoches 70 du téton 56 au regard de la gorge 52 et dans le second jeu J2 entre le téton 56 et la gorge 52 lorsque ce jeu est présent, et enfin dans le canal extérieur 66.

Même si l'agrafage de la voûte de pression 27 conduit à un effet de blocage, lié à la diminution ou à la disparition des jeux J1 et/ou J2, la présence des passages additionnels 68 formés par les encoches 70 garantit le passage des gaz, empêchant l'augmentation anormale de la pression partielle des gaz corrosifs à l'intérieur de la voûte de pression 27 et limitant donc fortement les phénomènes de corrosion, et notamment de corrosion sous contraintes (SCC).

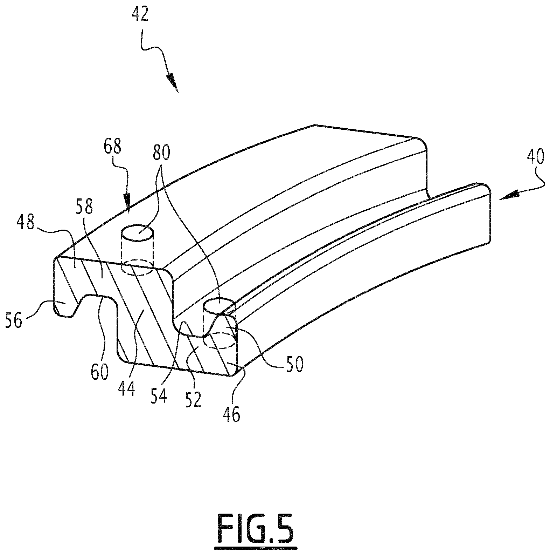

Dans la variante illustrée par la figure 5, au moins un passage additionnel 68 de circulation de gaz est formé par un trou traversant 80 ménagé dans les fonds des gorges 58, 52 additionnelles. Un passage traversant 80 s'étend ici radialement à travers le fond 60, 54 de chaque gorge 58, 52. Les trous 80 débouchent radialement vers l'intérieur dans la gorge 58, 52, et radialement vers l'extérieur à l'opposé de la gorge 58, 52.

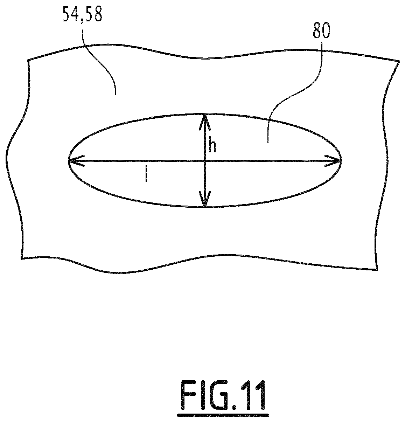

Les dimensions h et l du trou 80 sont représentées sur la figure 11. La dimension axiale maximale h du trou traversant 80 est comprise entre 10% et 100% de la largeur de la gorge 58, 52. La dimension h et la largeur de la gorge 58, 52 sont prises en projection sur l'axe A-A'.

De même, la longueur l du trou traversant 80, prise en projection sur un axe perpendiculaire à l'axe A-A' est avantageusement inférieure au jeu maximum entre les spires servant au dimensionnement au fluage de la gaine de pression 20, et est déterminé en fonction du débit de gaz à faire passer et en fonction du nombre de trous percés sur une circonférence.

Le trou traversant 80 est de préférence de forme oblongue, en étant allongé dans le sens circonférentiel.

Avantageusement, en fonction de la surface additionnelle de passage de gaz souhaitée, le nombre de trous traversant 80 ménagés dans chaque gorge 58, 52 est supérieur à 2 trous traversant 80 par spire 42, et notamment compris entre 2 et 10 trous traversant 80 par spire 42, pour des tailles de profils d'épaisseur comprise entre 6.2 mm et 12 mm et des diamètres internes de pose compris entre 50 mm et 550 mm.

Des exemples de dimensions de trous traversant 80 sont donnés dans le tableau ci-dessous pour des profils en Z d'épaisseurs respectives égales à 6.2 mm, 8 mm, 10 mm et 12 mm.

**[Table 2]**

| | Imax trou (mm) | hmax trou (mm) | Strou (mm2) |
|---|---|---|---|
| Z 6,2 mm | 2,0 | 1,3 | 8,5 |
| Z 8 mm | 2,6 | 1,7 | 14,1 |
| Z 10 mm | 3,3 | 2,2 | 22,1 |
| Z 12 mm | 3,9 | 2,6 | 31,8 |

Les trous traversant 80 sont par exemple ménagés par perçage à travers les gorges 58, 52

Le fonctionnement de cette variante de conduite flexible est par ailleurs analogue à celle décrite sur la figure 1.

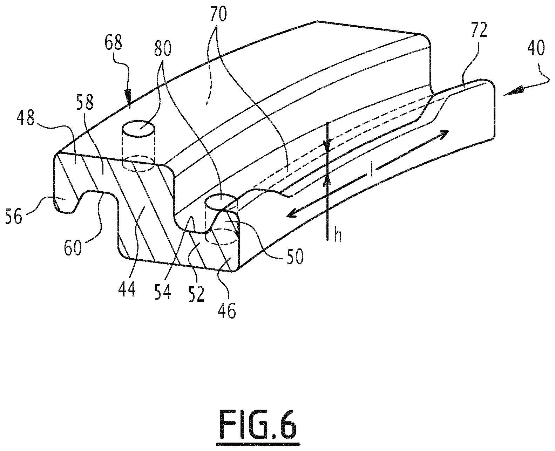

Dans une variante représentée sur la figure 6, le fil de forme profilé 40 comporte pour chaque spire 42, au moins un passage additionnel 68 sous forme d'une encoche 70 et au moins un passage additionnel 68 sous forme d'un trou 80, venant en complément des encoches 70.

Dans une variante, non représentée, seul un des tétons 50, 56 est muni d'encoches 70, l'autre téton 56, 50 étant dépourvu d'encoches 70.

Dans une autre variante, non représentée, seule une gorge 52, 58 est munie d'au moins un trou traversant 80, l'autre gorge 58, 52 étant dépourvue de trous traversant 80.

Dans d'autres variantes, non représentées, des vagues ou successions d'encoches 70 plus petites sont réalisées sur les tétons 50, 56.

Plus généralement, au moins une spire de la voûte de pression 27 présente un profil de géométrie en forme de T, de U, de K, de X ou de i.

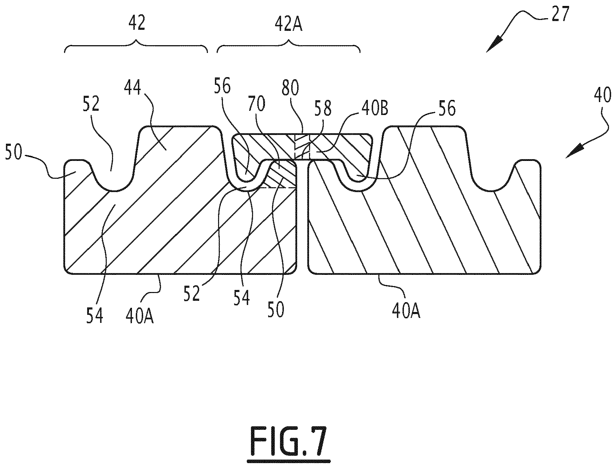

Ainsi, dans une variante représentée sur la figure 7, la voûte de pression 27 est formée de plusieurs fils de forme profilés 40A, 40B, de profils différents en section, agrafés les uns sur les autres.

Dans cet exemple, au moins un fil de forme profilé 40A est de profil en forme de T. Il délimite, de part et d'autre de la région centrale 44, deux tétons intérieurs 50 faisant saillie vers l'extérieur, et pour chaque téton 50, une gorge intermédiaire 52 entre le téton 50 et la région centrale 44.

Le fil de forme profilé 40A est agrafé avec un autre fil de forme profilé 40B (généralement appelé clip) de profil en forme de U. Le profil en forme de U comporte une gorge additionnelle 58, et des tétons additionnels 56 extérieurs faisant saillie vers l'intérieur de part et d'autre de la gorge additionnelle 58.

Chaque téton 50 d'une spire 42 du fil de forme 40A est reçu dans la gorge additionnelle 58 d'une spire adjacente du fil de forme 40B. De même, chaque téton additionnel 56 d'une spire 42A du fil de forme 40B est reçu dans la gorge 52 d'une spire 42 du fil de forme 40A.

Ici, au moins un passage additionnel 68 de circulation de gaz est ménagé sous forme d'une encoche 70 dans l'un des tétons 50 d'une spire du fil de forme 40A, et/ou sous forme d'un trou traversant 80 dans le fond 58 d'une spire du fil de forme 40B, avantageusement en position centrale.

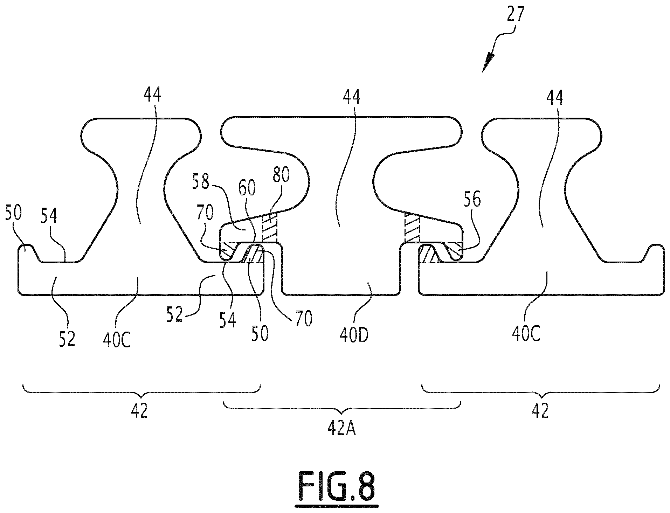

Dans la variante illustrée par la figure 8, au moins un fil de forme 40C présente un profil en forme de T et au moins au fil de forme 40D présente un profil en forme de K.

Le profil du fil de forme 40C définit un téton 50 intérieur et une gorge 52 intérieure entre le téton 50 et la partie centrale 44.

De même, le fil de forme additionnel 40D délimite un téton additionnel 56 extérieur et une gorge additionnelle 58 extérieure entre le téton additionnel 56 et la partie centrale 44.

Chaque téton 50 d'une spire 42 du fil de forme 40C est reçu dans la gorge additionnelle 58 d'une spire adjacente 42A du fil de forme 40D. De même, chaque téton additionnel 56 d'une spire adjacente 42A du fil de forme 40D est reçu dans la gorge 52 de la spire 42 du fil de forme 40C.

Comme décrit précédemment, un passage additionnel 68 de circulation de gaz est ménagé sous forme d'une encoche 70 dans les tétons 50, 56, ou/et sous forme d'un trou traversant 80 dans le fond 60 des deux gorges 58 du profil 40D.

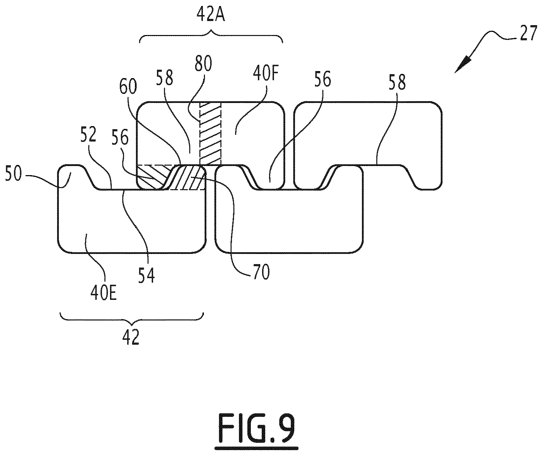

Dans la variante représentée sur la figure 9, le fil de forme 40E présente un profil en forme de U s'ouvrant radialement vers l'extérieur et le fil de forme 40F, agrafé avec le fil de forme 40E, présente un profil en forme de C s'ouvrant radialement vers l'intérieur.

Le profil du fil de forme 40E délimite une gorge 52 centrale et comporte deux tétons 50 intérieurs faisant saillie vers l'extérieur de part et d'autre de la gorge 52.

Le profil du fil de forme 40F présente une gorge additionnelle 58 et de part et d'autre de la gorge additionnelle 58, deux tétons additionnels 56 extérieurs faisant saillie vers l'intérieur à partir de la gorge additionnelle 58.

Chaque téton 50 du fil de forme 40E est reçu dans une gorge additionnelle 58 du fil de forme 40F, et chaque téton additionnel 56 du fil de forme 40F, est reçu dans une gorge 52 du fil de forme 40E.

Comme décrit précédemment, au moins un passage additionnel 68 de circulation de gaz est ménagé sous forme d'une encoche 70 dans les tétons 50, 56 ou sous forme d'un trou traversant 80 dans le fond 60 de la gorge 58 du profil 40F, avantageusement en son milieu.

## Revendications

1. Conduite flexible (10) de transport de fluide comportant :
- une gaine tubulaire (20) en polymère délimitant un passage (16) de circulation de fluide d'axe central (A-A') ;
- une voûte de pression (27), disposée autour et à l'extérieur de la gaine tubulaire (20), la voûte de pression (27) comportant un enroulement à pas court d'au moins un fil de forme (40 ; 40A ; 40C ; 40E) agrafé, le fil de forme (40 ; 40A ; 40C ; 40E) comportant une pluralité de spires (42) agrafées, chaque spire (42) présentant, en section dans un plan axial médian, un profil définissant au moins un téton (50, 56) et pour le ou chaque téton (50,56), une gorge (52, 58) adjacente au téton (50, 56), le téton (50, 56) étant propre à s'agrafer dans une gorge (58, 52) d'une spire adjacente d'un fil de forme (40 ; 40B ; 40D ; 40F) de la voûte de pression (27);
- au moins une couche d'armures (24, 25) disposée à l'extérieur de la voûte de pression (27),
**caractérisé en ce qu'**au moins un passage additionnel (68) de circulation de gaz à travers la voûte de pression (27) depuis l'intérieur de la voûte de pression (27) vers l'extérieur de la voûte de pression (27) est défini dans le ou dans chaque téton (50, 56) et/ou dans le fond (60, 54) de la ou de chaque gorge (58, 52), le passage additionnel (68) permettant la circulation de gaz entre l'intérieur de la voûte de pression (27) et l'extérieur de la voûte de pression (27) en plus d'au moins un jeu (J1, J2) entre le téton (50, 56) d'une spire (42) et le fond (60, 54) de la gorge (58, 52) de la spire adjacente, ou en l'absence de jeu (J1, J2) entre le téton (50, 56) d'une spire (42) et le fond (60, 54) de la gorge (58, 52) de la spire adjacente.

2. Conduite (10) selon la revendication 1, dans laquelle le profil de chaque spire (42) définit, en section dans un plan axial médian, un téton (50) et une gorge (52) adjacente au téton (50), le téton (50) étant propre à s'agrafer dans une gorge (58) d'une spire adjacente d'un fil de forme (40 ; 40B ; 40D ; 40F) de la voûte de pression (27), le profil de chaque spire (42) définissant, en section dans un plan axial médian, un téton additionnel (56) et une gorge additionnelle (58) adjacente au téton additionnel (56), le téton additionnel (56) étant propre à s'agrafer dans une gorge (52) d'une spire adjacente opposée d'un fil de forme (40 ; 40B ; 40D ; 40F) de la voûte de pression (27), située à l'opposé de la spire adjacente, au moins un passage additionnel (68) de circulation de gaz à travers la voûte de pression (27) depuis l'intérieur de la voûte de pression (27) vers l'extérieur de la voûte de pression (27) étant défini dans chaque téton (50, 56) et/ou dans le fond (60, 54) de chaque gorge (58, 52), chaque passage additionnel (68) permettant la circulation de gaz entre l'intérieur de la voûte de pression (27) et l'extérieur de la voûte de pression (27).

3. Conduite (10) selon la revendication 1 ou 2, dans laquelle la surface cumulée du ou des passages additionnels (68), prise en projection dans un plan transversal, correspond à la surface définie par un jeu (J1, J2) supérieur à 0,1 mm, entre le téton (50, 56) d'une spire et le fond (60, 54) de la gorge (58, 52) de la spire adjacente.

4. Conduite (10) selon la revendication 3, dans laquelle la surface cumulée du ou des passages additionnels (68), prise en projection dans un plan transversal, correspond à la surface définie par un jeu (J1, J2) compris entre 0,1 mm et 0,3 mm entre le téton (50, 56) d'une spire et le fond (60, 54) de la gorge (58, 52) de la spire adjacente et est comprise avantageusement entre 9 mm² et 262 mm².

5. Conduite (10) selon l'une quelconque des revendications précédentes, dans laquelle au moins un passage additionnel (68) est formé par une encoche (70) ménagée dans le ou dans chaque téton (50, 56).

6. Conduite (10) selon la revendication 5, dans laquelle la largeur de l'encoche (70) ménagée dans le ou dans chaque téton (50, 56) est inférieure à 15% du périmètre du bord libre (72) du téton (50, 56).

7. Conduite (10) selon l'une quelconque des revendications 5 ou 6, dans laquelle la hauteur de l'encoche (70) est comprise entre 10% et 100% de la hauteur du téton (50, 56), prise radialement par rapport à l'axe central (A-A') entre le fond (54, 60) de la gorge (52, 58) et le bord libre (72) du téton (50, 56) à l'écart de l'encoche (70).

8. Conduite (10) selon l'une quelconque des revendications précédentes, dans laquelle au moins un passage additionnel (68) est formé par un trou traversant (80) ménagé dans le fond (60, 54) de la ou de chaque gorge (58, 52).

9. Conduite (10) selon la revendication 8, dans laquelle le trou traversant (80) s'étend radialement à travers le fond (60, 54) de la ou de chaque gorge (58, 52).

10. Conduite (10) selon la revendication 8 ou 9, dans laquelle la dimension axiale maximale du trou traversant (80), prise en projection sur l'axe central (A-A') est inférieure à la largeur du trou traversant (80), prise transversalement par rapport à l'axe central (A-A').

11. Conduite (10) selon l'une quelconque des revendications 8 à 10, dans laquelle la dimension axiale maximale du trou traversant (80) est inférieure à 100% de la dimension axiale maximale de la ou de chaque gorge (58, 52), les dimensions axiales étant prises en projection sur l'axe central (A-A').

12. Conduite (10) selon l'une quelconque des revendications précédentes, dans laquelle le profil du fil de forme (40 ; 40A ; 40C ; 40E) est choisi parmi un profil de section en Z, en T, en Ψ, en K et en C.

13. Procédé de fabrication d'une conduite flexible (10), comportant les étapes suivantes :
- fourniture d'une gaine tubulaire (20) en polymère délimitant un passage (16) de circulation de fluide d'axe central (A-A') ;
- formation d'une voûte de pression (27) autour de la gaine tubulaire (20), la formation comportant un enroulement à pas court et un agrafage d'au moins un fil de forme (40 ; 40A ; 40C ; 40E), le fil de forme (40 ; 40A ; 40C ; 40E) comportant une pluralité de spires (42) agrafées, chaque spire (42) présentant, en section dans un plan axial médian, un profil définissant au moins un téton (50, 56) et pour le ou chaque téton (50,56), une gorge (52, 58) adjacente au téton (50, 56), le téton (50, 56) étant propre à s'agrafer dans une gorge (58, 52) d'une spire adjacente d'un fil de forme (40 ; 40B ; 40D ; 40F) de la voûte de pression (27) ;
- disposition d'au moins une couche d'armures (24, 25) à l'extérieur de la voûte de pression (27),
**caractérisé en ce qu'**au moins un passage additionnel (68) de circulation de gaz à travers la voûte de pression (27) depuis l'intérieur de la voûte de pression (27) vers l'extérieur de la voûte de pression (27) est défini dans le ou dans chaque téton (50, 56) et/ou dans le fond (60, 54) de la ou de chaque gorge (58, 52), le passage additionnel (68) permettant la circulation de gaz entre l'intérieur de la voûte de pression (27) et l'extérieur de la voûte de pression (27) en plus d'au moins un jeu (J1, J2) entre le téton (50, 56) d'une spire (42) et le fond (60, 54) de la gorge (58, 52) de la spire adjacente, ou en l'absence de jeu (J1, J2) entre le téton (50, 56) d'une spire (42) et le fond (60, 54) de la gorge (58, 52) de la spire adjacente .

14. Procédé selon la revendication 13, dans lequel le ou chaque passage additionnel (68) de circulation est formé par réalisation d'une encoche (70) dans le ou dans chaque téton (50, 56) et/ou par réalisation d'un trou traversant (80) à travers le fond (60, 54) de la ou de chaque gorge (58, 52).

15. Utilisation d'une conduite flexible (10) selon l'une quelconque des revendications 1 à 12, pour le transport de fluide à travers le passage (16) de circulation de fluide, l'utilisation comportant la diffusion d'un gaz contenu dans le fluide à travers la gaine tubulaire (20), puis à travers la voûte de pression (27), en passant par le ou chaque passage additionnel (68), depuis l'intérieur de la voûte de pression (27) vers l'extérieur de la voûte de pression (27).

## Patentansprüche

1. Flexible Leitung (10) für Fluidtransport, umfassend:
- eine rohrförmige Hülle (20) aus Polymer, die einen Durchgang (16) für Fluidzirkulation mit einer Mittelachse (A-A') begrenzt;
- ein Druckgewölbe (27), das um und außerhalb der rohrförmigen Hülle (20) angeordnet ist, wobei das Druckgewölbe (27) eine Wicklung mit kurzer Steigung von mindestens einem geklammerten Formdraht (40; 40A; 40C; 40E) umfasst, wobei der Formdraht (40; 40A; 40C; 40E) eine Vielzahl von geklammerten Windungen (42) aufweist, wobei jede Windung (42) im Querschnitt in einer axialen Mittelebene ein Profil aufweist, das mindestens einen Zapfen (50, 56) und für den oder jeden Zapfen (50, 56) eine Nut (52, 58) neben dem Zapfen (50, 56) definiert, wobei der Zapfen (50, 56) dazu geeignet ist, in eine Nut (58, 52) einer benachbarten Windung eines Formdrahts (40; 40B; 40D; 40F) der Druckgewölbe (27) geklammert zu werden;
- mindestens eine Bewehrungsschicht (24, 25) außerhalb des Druckgewölbes (27),
**dadurch gekennzeichnet, dass** mindestens ein zusätzlicher Durchgang (68) für Gaszirkulation durch das Druckgewölbe (27) von der Innenseite des Druckgewölbes (27) zu der Außenseite des Druckgewölbes (27) in dem oder jedem Zapfen (50, 56) und/oder in dem Boden (60, 54) der oder jeder Nut (58, 52) definiert ist, wobei der zusätzliche Durchgang (68), die Gaszirkulation von Gas zwischen der Innenseite des Druckgewölbes (27) und der Außenseite des Druckgewölbes (27) ermöglicht, zusätzlich zu mindestens einem Spielraum (J1, J2) zwischen dem Zapfen (50, 56) einer Windung (42) und dem Boden (60, 54) der Nut (58, 52) der benachbarten Windung oder bei Fehlen eines Spielraums (J1, J2) zwischen dem Zapfen (50, 56) einer Windung (42) und dem Boden (60, 54) der Nut (58, 52) der benachbarten Windung.

2. Leitung (10) nach Anspruch 1, wobei das Profil jeder Windung (42) im Querschnitt in einer axialen Mittelebene einen Zapfen (50) und eine Nut (52) neben dem Zapfen (50) definiert, wobei der Zapfen (50) geeignet ist, in eine Nut (58) einer benachbarten Windung eines Formdrahts (40; 40B; 40D; 40F) des Druckgewölbes (27) geklammert zu werden, wobei das Profil jeder Windung (42) im Querschnitt in einer axialen Mittelebene einen zusätzlichen Zapfen (56) und eine zusätzliche Nut (58) benachbart zu dem zusätzlichen Zapfen (56) definiert, wobei der zusätzliche Zapfen (56) geeignet ist, um in eine Nut (52) einer gegenüberliegenden benachbarten Windung eines Formdrahts (40; 40B; 40D; 40F) des Druckgewölbes (27), das sich gegenüber der benachbarten Windung befindet, geklammert zu werden, wobei mindestens ein zusätzlicher Durchgang (68) für Gaszirkulation durch die Druckgewölbe (27) von der Innenseite des Druckgewölbes (27) zu der Außenseite des Druckgewölbes (27) in jedem Zapfen (50, 56) und/oder im Boden (60, 54) jeder Nut (58, 52) definiert ist, wobei jeder zusätzliche Durchgang (68) die Gaszirkulation zwischen der Innenseite des Druckgewölbes (27) und der Außenseite des Druckgewölbes (27) ermöglicht.

3. Leitung (10) nach Anspruch 1 oder 2, wobei die kumulierte Fläche des oder der zusätzlichen Durchgänge (68), in einer Projektion in einer Querebene betrachtet, der Fläche entspricht, die durch ein Spiel (J1, J2) größer als 0,1 mm zwischen dem Zapfen (50, 56) einer Windung und dem Boden (60, 54) der Nut (58, 52) der benachbarten Windung definiert ist.

4. Leitung (10) nach Anspruch 3, wobei die kumulierte Fläche des oder der zusätzlichen Durchgänge (68), in einer Projektion in einer Querebene betrachtet, der Fläche entspricht, die durch ein Spiel (J1, J2) zwischen 0,1 mm und 0,3 mm zwischen dem Zapfen (50, 56) einer Windung und dem Boden (60, 54) der Nut (58, 52) der benachbarten Windung definiert ist und vorteilhafterweise zwischen 9 mm² und 262 mm² liegt.

5. Leitung (10) nach einem der vorherigen Ansprüche, wobei mindestens ein zusätzlicher Durchgang (68) durch eine Kerbe (70) gebildet ist, die in dem oder jedem Zapfen (50, 56) gebildet ist.

6. Leitung (10) nach Anspruch 5, wobei die Breite der Kerbe (70), die in dem oder jedem Zapfen (50, 56) gebildet ist, weniger als 15 % des Umfangs des freien Rands (72) des Zapfens (50, 56) ist.

7. Leitung (10) nach einem der Ansprüche 5 oder 6, wobei die Höhe der Kerbe (70), radial genommen in Bezug auf die Mittelachse (A-A') zwischen dem Boden (54, 60) der Nut (52, 58) und dem freien Rand (72) des Zapfens (50, 56) im Abstand von der Kerbe (70), zwischen 10 % und 100 % der Höhe des Zapfens (50, 56) ist.

8. Leitung (10) nach einem der vorherigen Ansprüche, wobei mindestens ein zusätzlicher Durchgang (68) durch ein Durchgangsloch (80) gebildet ist, das im Boden (60, 54) der oder jeder Nut (58, 52) ausgebildet ist.

9. Leitung (10) nach Anspruch 8, wobei sich das Durchgangsloch (80) radial durch den Boden (60, 54) der oder jeder Nut (58, 52) erstreckt.

10. Leitung (10) nach Anspruch 8 oder 9, wobei die maximale axiale Abmessung des Durchgangslochs (80), projiziert auf die Mittelachse (A-A'), quer zu der Mittelachse (A-A') betrachtet, kleiner ist als die Breite des Durchgangslochs (80).

11. Leitung (10) nach einem der Ansprüche 8 bis 10, wobei die maximale axiale Abmessung des Durchgangslochs (80) weniger als 100 % der maximalen axialen Abmessung der oder jeder Nut (58, 52) ist, wobei die axialen Abmessungen als Projektion auf die Mittelachse (A-A') genommen werden.

12. Leitung (10) nach einem der vorherigen Ansprüche, wobei das Profil des Formdrahts (40; 40A; 40C; 40E) ausgewählt ist aus einem Z-, T-, Ψ- und C-Querschnittsprofil.

13. Verfahren zur Herstellung einer flexiblen Leitung (10), umfassend die folgenden Schritte:
- Bereitstellen einer rohrförmigen Hülle (20) aus Polymer, die einen Durchgang (16) für Fluidzirkulation mit einer Mittelachse (A-A') begrenzt;
- Bilden eines Druckgewölbes (27) um die rohrförmige Hülle (20), das Bilden umfassend ein Wickeln mit kurzer Steigung und ein Klammern von mindestens einem Formdraht (40; 40A; 40C; 40E), wobei der Formdraht (40; 40A; 40C; 40E) eine Vielzahl von gehefteten Windungen (42) aufweist, wobei jede Windung (42) im Querschnitt in einer axialen Mittelebene ein Profil aufweist, das mindestens einen Zapfen (50, 56) und für den oder jeden Zapfen (50, 56) eine Nut (52, 58) neben dem Zapfen (50, 56) definiert, wobei der Zapfen (50, 56) dazu geeignet ist, in eine Nut (58, 52) einer benachbarten Windung eines Formdrahts (40; 40B; 40D; 40F) der Druckgewölbe (27) geklammert zu werden;
- Anordnen mindestens einer Bewehrungsschicht (24, 25) außerhalb des Druckgewölbes (27),
**dadurch gekennzeichnet, dass** mindestens ein zusätzlicher Durchgang (68) für Gaszirkulation durch das Druckgewölbe (27) von der Innenseite des Druckgewölbes (27) zu der Außenseite des Druckgewölbes (27) in dem oder jedem Zapfen (50, 56) und/oder in dem Boden (60, 54) der oder jeder Nut (58, 52) definiert ist, wobei der zusätzliche Durchgang (68), die Gaszirkulation von Gas zwischen der Innenseite des Druckgewölbes (27) und der Außenseite des Druckgewölbes (27) ermöglicht, zusätzlich zu mindestens einem Spielraum (J1, J2) zwischen dem Zapfen (50, 56) einer Windung (42) und dem Boden (60, 54) der Nut (58, 52) der benachbarten Windung oder bei Fehlen eines Spielraums (J1, J2) zwischen dem Zapfen (50, 56) einer Windung (42) und dem Boden (60, 54) der Nut (58, 52) der benachbarten Windung.

14. Verfahren nach Anspruch 13, wobei der oder jeder zusätzliche Durchgang (68) für Zirkulation durch Herstellen einer Kerbe (70) in dem oder jedem Zapfen (50, 56) und/oder durch Herstellen eines Durchgangslochs (80) durch den Boden (60, 54) der oder jeder Nut (58, 52) gebildet ist.

15. Verwendung einer flexiblen Leitung (10) nach einem der Ansprüche 1 bis 12 zum Transport von Fluid durch den Durchgang (16) für Fluidzirkulation, die Verwendung umfassend die Diffusion eines in dem Fluid enthaltenen Gases durch die rohrförmige Hülle (20) und dann durch das Druckgewölbe (27), durch den oder jeden zusätzlichen Durchgang (68), von der Innenseite des Druckgewölbes (27) zu der Außenseite des Druckgewölbes (27).

## Claims

1. A flexible fluid transport pipe (10) comprising:
- a tubular sheath (20) made of polymer defining a fluid circulation passage (16) with a central axis (A-A') ;
- a pressure vault (27), arranged around and outside the tubular sheath (20), the pressure vault (27) comprising a short-pitch winding of at least one interlocked shaped wire (40; 40A; 40C; 40E), the shaped wire (40; 40A; 40C ; 40E) comprising a plurality of interlocked turns (42), each turn (42) having a profile, in section in a median axial plane, defining at least one stud (50, 56) and, for the or each stud (50, 56), a groove (52, 58) adjacent to the stud (50, 56), the stud (50, 56) being capable of being interlocked in a groove (58, 52) of an adjacent turn of a shaped wire (40; 40A; 40C; 40E) of the pressure vault (27);
- at least one armor layer (24, 25) arranged outside the pressure vault (27),
**characterized in that** at least one additional passage (68) for gas circulation through the pressure vault (27) from the inside of the pressure vault (27) to the outside of the pressure vault (27) is defined in the or each stud (50, 56) and/or in the bottom (60, 54) of the or each groove (58, 52) the additional passage (68) allowing the flow of gas between the inside of the pressure vault (27) and the outside of the pressure vault (27) in addition to at least one clearance (J1, J2) between the stud (50, 56) of a turn (42) and the bottom (60, 54) of the groove (58, 52) of the adjacent turn, or in the absence of clearance (J1, J2) between the stud (50, 56) of a turn (42) and the bottom (60, 54) of the groove (58, 52) of the adjacent turn.

2. The pipe (10) according to claim 1, wherein the profile of each turn (42) defines, in section in a median axial plane, a stud (50) and a groove (52) adjacent to the stud (50), the stud (50) being capable of being interlocked into a groove (58) of an adjacent turn of a shaped wire (40; 40B; 40D ; 40F) of the pressure vault (27), the profile of each turn (42) defining an additional stud (56), in section in a median axial plane, and an additional groove (58) adjacent to the additional stud (56), the additional stud (56) being capable of being interlocked into a groove (52) of an adjacent turn of a shaped wire (40; 40B; 40D; 40F) of the pressure vault (27), located opposite the adjacent turn, at least one additional gas circulation passage (68) through the pressure vault (27) from the inside of the pressure vault (27) to the outside of the pressure vault (27) being defined in each stud (50, 56) and/or in the bottom (60, 54) of each groove (58, 52), each additional passage (68) allowing gas circulation between the inside of the pressure vault (27) and the outside of the pressure vault (27).

3. The pipe (10) according to claim 1 or 2, wherein the cumulative area of the additional passage(s) (68), when projected in a transverse plane, corresponds to the area defined by a clearance (J1, J2) greater than 0.1 mm, between the stud (50, 56) of one turn and the bottom (60, 54) of the groove (58, 52) of the adjacent turn.

4. The pipe (10) according to claim 3, wherein the cumulative surface of the additional passage(s) (68), taken in projection in a transverse plane, corresponds to the surface area defined by a clearance (J1, J2) of between 0.1 mm and 0.3 mm between the stud (50, 56) of a turn and the bottom (60, 54) of the groove (58, 52) of the adjacent turn and is advantageously between 9 mm² and 262 mm².

5. The pipe (10) according to any one of the preceding claims, wherein at least one additional passage (68) is formed by a notch (70) provided in the or each stud (50, 56).

6. The pipe (10) according to claim 5, wherein the width of the notch (70) in the or each stud (50, 56) is less than 15% of the perimeter of the free edge (72) of the stud (50, 56).

7. The pipe (10) according to any one of claims 5 or 6, wherein the height of the notch (70) is between 10% and 100% of the height of the stud (50, 56), taken radially in relation to the central axis (A-A') between the bottom (54, 60) of the groove (52, 58) and the free edge (72) of the stud (50, 56) away from the notch (70).

8. The pipe (10) according to any one of the preceding claims, wherein at least one additional passage (68) is formed by a through hole (80) provided in the bottom (60, 54) of the or each groove (58, 52).

9. The pipe (10) according to claim 8, wherein the through hole (80) extends radially through the bottom (60, 54) of the or each groove (58, 52).

10. The pipe (10) according to claim 8 or 9, wherein the maximum axial dimension of the through-hole (80), taken as projected on the central axis (A-A') is less than the width of the through-hole (80), taken transversely to the central axis (A-A').

11. The pipe (10) according to any one of claims 8 to 10, wherein the maximum axial dimension of the through hole (80) is less than 100% of the maximum axial dimension of the or each groove (58, 52), the axial dimensions being taken projected on the central axis (A-A').

12. The pipe (10) according to any one of the preceding claims, wherein the profile of the shaped wire (40; 40A; 40C; 40E) is selected from a Z, T, Ψ, K and C cross-sectional profile.

13. A method for manufacturing a flexible pipe (10), comprising the following steps:
- providing a tubular polymeric sheath (20) defining a central axis (A-A') fluid flow passage (16);
- forming a pressure vault (27) around the tubular sheath (20), the forming comprising short-pitch winding and interlocking of at least one shaped wire (40; 40A; 40C; 40E), the shaped wire (40; 40A; 40C; 40E) comprising a plurality of interlocked turns (42), each turn (42) having a profile, in cross-section in a median axial plane, defining at least one stud (50, 56) and for the or each stud (50, 56), a groove (52, 58) adjacent to the stud (50, 56), the stud (50, 56) being adapted to be interlocked in a groove (58, 52) of an adjacent turn of a shaped wire (40; 40A; 40C; 40E) of the pressure vault (27);
- arranging at least one armor layer (24, 25) on the outside of the pressure vault
(27), **characterized in that** at least one additional passage (68) for gas circulation through the pressure vault (27) from the inside of the pressure vault (27) to the outside of the pressure vault (27) is defined in the or each stud (50, 56) and/or in the bottom (60, 54) of the or each groove (58, 52), the additional passage (68) allowing the flow of gas between the inside of the pressure vault (27) and the outside of the pressure vault (27) in addition to at least one clearance (J1, J2) between the stud (50, 56) of a turn (42) and the bottom (60, 54) of the groove (58, 52) of the adjacent turn, or in the absence of clearance (J1, J2) between the stud (50, 56) of a turn (42) and the bottom (60, 54) of the groove (58, 52) of the adjacent turn.

14. The method according to claim 13, wherein the or each additional flow passage (68) is formed by making a notch (70) in the or each stud (50, 56) and/or by making a through hole (80) through the bottom (60, 54) of the or each groove (58, 52).

15. A use of a flexible pipe (10) according to any one of claims 1 to 12, for transporting fluid through the fluid flow passage (16), the use comprising diffusing a gas contained in the fluid through the tubular sheath (20), and then through the pressure vault (27), via the or each additional passage (68), from inside the pressure vault (27) to the outside of the pressure vault (27).
